(19) Europäisches Patentamt
European Patent Office
Office européen des brevets

(11) **EP 2 264 402 A2**

(12) **EUROPEAN PATENT APPLICATION**

(43) Date of publication:
**22.12.2010 Bulletin 2010/51**

(51) Int Cl.:
**G01C 21/20** *(2006.01)*        **G01C 22/00** *(2006.01)*

(21) Application number: **10162069.8**

(22) Date of filing: **06.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **28.05.2009 KR 20090046884**

(71) Applicant: **Samsung Electronics Co., Ltd.
Suwon-si, Gyeonggi-do (KR)**

(72) Inventors:
• **Park, Kyong-Ha
442-742, Gyeonggi-do (KR)**
• **Hong, Hyun-Su
442-742, Gyeonggi-do (KR)**
• **Park, Sung-Min
442-742, Gyeonggi-do (KR)**

(74) Representative: **Grünecker, Kinkeldey,
Stockmair & Schwanhäusser
Anwaltssozietät
Leopoldstrasse 4
80802 München (DE)**

(54)    **Pedestrian navigation device and method using heading information of terminal**

(57)    A pedestrian navigation device and method uses heading information of a terminal to measure a location. Moving direction information and x, y, and z-axis acceleration values of the terminal are detected. Heading information is calculated using the moving direction information of the terminal. Validity of the heading information is determined using the detected x, y, and z-axis acceleration values, making it possible to more accurately estimate the location of the pedestrian.

FIG.1

Description

## TECHNICAL FIELD OF THE INVENTION

The present invention relates generally to a pedestrian navigation device and method, and more particularly, to a pedestrian navigation device and method using heading information of a terminal.

## BACKGROUND OF THE INVENTION

A pedestrian navigation device performs route guidance centered on the pedestrian rather than vehicle using, for example, Dead Reckoning (DR) positioning technology.

The DR positioning technology, a technology capable of detecting the relative self-location and the moving direction using the previous location information, generally measures a moving distance and a moving direction of a moving object, using a sensor for detecting a heading direction of a terminal, like the earth magnetic field sensor, and a sensor for detecting rectilineal movement of the terminal, like the acceleration sensor.

The pedestrian navigation device including not only these sensors but also the Global Positioning System (GPS), generally measures the location of the pedestrian using location information and direction information provided from the GPS. If the user moves to a GPS shaded area like the downtown area, the pedestrian navigation device measures the location of the pedestrian using the earth magnetic field sensor and the acceleration sensor.

The conventional pedestrian navigation device measures the location of the pedestrian using the GPS, or measures the location of the pedestrian using the earth magnetic field sensor and the acceleration sensor in a GPS shaded area like the downtown area.

However, because the heading information including the heading direction of the terminal, which is detected from the earth magnetic field sensor, indicates the heading direction of the terminal rather than the pedestrian, the heading direction is not necessarily coincident with the walking direction of the pedestrian.

If the heading information of the terminal is not coincident with the heading information of the pedestrian, the pedestrian navigation device may not accurately measure the location of the pedestrian.

That is, the pedestrian navigation device does not measure the exact location of the pedestrian unless the heading information of the terminal detected from the ear th magnetic field sensor is coincident with the walking direction of the pedestrian.

## SUMMARY OF THE INVENTION

To address the above-discussed deficiencies of the prior art, it is a primary object to provide at least the features described below. Accordingly, an aspect of the present invention provides a pedestrian navigation device and method for estimating the accurate location of a pedestrian by determining validity of heading information of a terminal.

In accordance with one aspect of the present invention, there is provided a pedestrian navigation device using heading information of a terminal. A sensor detects x, y, and z-axis acceleration values and moving direction information of the terminal. A heading information calculator calculates heading information by using the moving direction information of the terminal. An accuracy determiner determines validity of the heading information using the detected x, y, and z-axis acceleration values. A location estimation filter estimates a location of a pedestrian according to the determination results.

In accordance with another aspect of the present invention, there is provided a pedestrian navigation method that estimates a location based on heading information of a terminal. X, y, and z-axis acceleration values and moving direction information of the terminal are detected. Heading information is calculated using the moving direction information of the terminal. Vvalidity of the heading information is determined using the detected x, y, and z-axis acceleration values. A location of a pedestrian is estimated according to the determination results.

Before undertaking the DETAILED DESCRIPTION OF THE INVENTION below, it may be advantageous to set forth definitions of certain words and phrases u sed throughout this patent document: the terms "include" and "comprise," as well as derivatives thereof, mean inclusion without limitation; the term "or," is inclusive, m eaning and/or; the phrases "associated with" and "associated therewith," as well as d erivatives thereof, may mean to include, be included within, interconnect with, contai n, be contained within, connect to or with, couple to or with, be communicable with, cooperate with, interleave, juxtapose, be proximate to, be bound to or with, have, hav e a property of, or the like; and the term "controller" means any device, system or pa rt thereof that controls at least one operation, such a device may be implemented in h ardware, firmware or software, or some combination of at least two of the same. It s hould be noted that the functionality associated with any particular controller may be centralized or distributed, whether locally or remotely. Definitions for certain words and phrases are provided throughout this patent document, those of ordinary skill in the art should understand that in many, if not most instances, such definitions apply t o prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a structure of a pedestrian navigation device according to an embodiment of the present invention;
FIGURE 2 illustrates a device that determines validity of heading information of a terminal according to an embodiment of the present invention;
FIGURE 3 illustrates a process of estimating the location of a pedestrian using heading information of a terminal in a pedestrian navigation device according to an embodiment of the present invention; and
FIGURE 4 illustrates x, y, and z-axis acceleration variances with respect to frequency according to an embodiment of the present invention.

Throughout the drawings, the same drawing reference numerals will be under stood to refer to the same elements, features and structures.

## DETAILED DESCRIPTION OF THE INVENTION

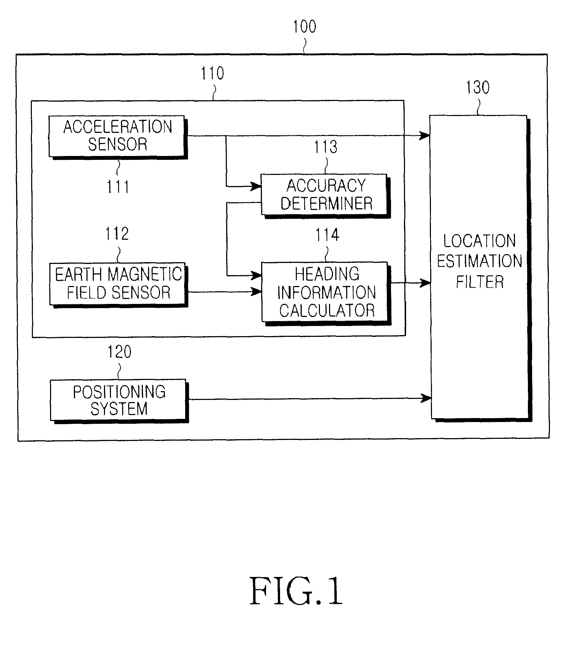

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged navigation device.

FIGURE 1 illustrates a pedestrian navigation device according to an embodiment of the present invention. In an embodiment of the present invention, the pedestrian navigation device may be a portable terminal that a user can carry.

A pedestrian navigation device 100 according to an embodiment of the present invention includes a pedestrian DR 110, a positioning system 120, and a location estimation filter 130. The pedestrian DR 110 includes an acceleration sensor 111, an earth magnetic field sensor 112, an accuracy determiner 113, and a heading information calculator 114.

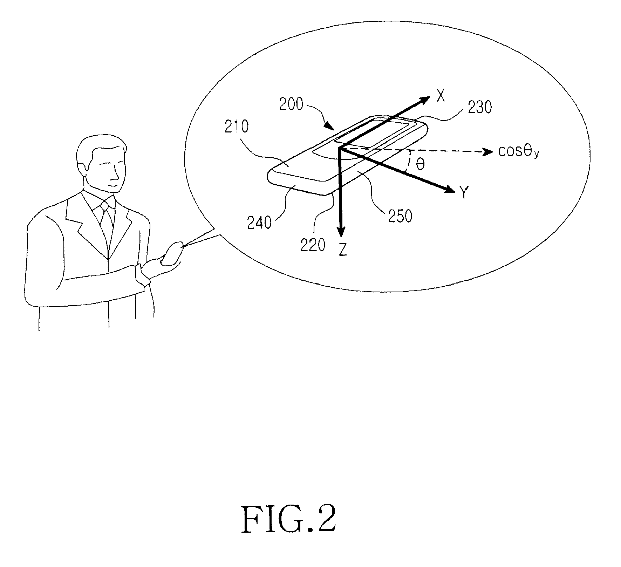

The pedestrian DR 110 calculates x, y, and z-axis acceleration values detected by the acceleration sensor 111 and sends the calculated x, y, and z-axis acceleration values to the location estimation filter 130. The DR 110 also determines whether heading information of the terminal detected by the earth magnetic field sensor 112 is suitable to be input to the location estimation filter 130, based on the calculated x, y, and z-axis acceleration values. The heading information indicates the heading of the terminal. For example, in a portable pedestrian navigation device 200 of FIGURE 2, reference numeral 210 represents the front side of the terminal, reference numeral 220 represents the back side of the terminal, reference numeral 230 represents the top side of an upper portion of the terminal on which a display device is mounted, reference numeral 240 represents the bottom side of a lower portion of the terminal on which a keypad is mounted, and reference numeral 250 represents the right side of the terminal. That is, the heading information indicates the direction towards which the top side 230 of the terminal extends when the user holds the terminal body.

To be specific, the acceleration sensor 111 in the pedestrian DR 110 detects x, y, and z-axis acceleration values and sends them to the location estimation filter 130 and the accuracy determiner 113.

The earth magnetic field sensor 112 detects the heading direction of the terminal, and outputs information about the detected heading direction to the heading information calculator 114.

The accuracy determiner 113 calculates a location cosine value for the y-axis using the input x, y, and z-axis acceleration values, and compares the calculated location cosine value with a predetermined location cosine threshold.

The y-axis location cosine value $\cos\theta_y$, a value for determining the coincidence between the moving direction of the user and the heading direction of the terminal, is calculated by

$$\cos\theta_y = \frac{a_y}{\sqrt{a_x^2 + a_y^2 + a_z^2}} \qquad \text{[Eqn. 1]}$$

where $\cos\theta_y$ denotes a y-axis location cosine value, *a* denotes an acceleration value, and $\theta_y$ denotes an angle by which the terminal is tilted with respect to the y-axis.

For example, if the user moves while holding the pedestrian navigation device 200 such that the direction of movement is coincident with the heading direction of the pedestrian navigation device 200 as illustrated in FIGURE 2, then the acceleration sensor 111 and the earth magnetic field sensor 112 merely detect the x and z-axis acceleration and direction information, but scarcely detect the y-axis acceleration and direction information.

Thus, the accuracy determiner 113 determines whether the following Conditions 1 and 2 are satisfied.

Condition 1: squared y-axis location cosine value $(\cos^2\theta_y) \leq \alpha$

Condition 2: y-axis acceleration variance $\left( \sigma_y^2 \right) \leq \beta$

In the two conditions, $\alpha$ and $\beta$ denote thresholds approximating zero ('0').

That is, the accuracy determiner 113 determines whether the calculated y-axis location cosine value is less than or equal to the cosine threshold ($\alpha$), and compares a y-axis acceleration variance value $\sigma^2 y$ calculated using the y-axis acceleration value with a predetermined variance threshold ($\beta$) to determine whether the calculated acceleration variance value is less than or equal to the variance threshold.

The accuracy determiner 113 determines that the moving direction of the pedestrian is coincident with the heading direction of the terminal, if the calculated y-axis location cosine value is less than or equal to the cosine threshold and the calculated acceleration variance value is less than or equal to the variance threshold.

Thereafter, the accuracy determiner 113 provides to the heading information calculator 114 a control signal for outputting the calculated heading information of the terminal to the location estimation filter 130.

Upon receiving the control signal, the heading information calculator 114 provides the calculated heading information of the terminal to the location estimation filter 130.

The location estimation filter 130 measures the location of the pedestrian using the x, y, and z-axis acceleration values received from the acceleration sensor 111 and the heading information of the terminal received from the heading information calculator 114.

The positioning system 120, which is a general GPS, calculates the current location of the pedestrian using time and distance information received from three or more satellites.

The present invention may measure the more accurate location of the pedestrian, since it measures the location of the pedestrian only when the moving direction of the pedestrian is coincident with the heading direction of the terminal.

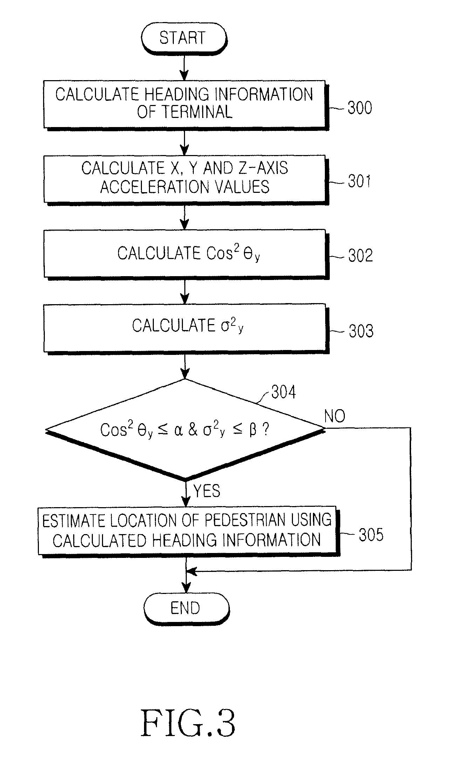

FIGURE 3 illustrates a process of measuring a location of a pedestrian depending on validity of a heading direction of a terminal in a pedestrian navigation device according to an embodiment of the present invention.

In block 300, the earth magnetic field sensor 112 detects a heading direction of the terminal upon a location measurement request of the pedestrian, and outputs the detected heading direction to the heading information calculator 114. The heading information calculator 114 calculates heading information of the terminal, which includes the detected heading direction.

In block 301, the acceleration sensor 111 measures x, y, and z-axis accelerations of the terminal, and outputs the measured accelerations to the location estimation filter 130 and the accuracy determiner 113. In block 302, the accuracy determiner 113 calculates a y-axis location cosine value $(\cos^2\theta_y)$ based on the measured acceleration values from the acceleration sensor 111, in accordance with Equation 1.

In block 303, the accuracy determiner 113 calculates a y-axis acceleration variance value $\left( \sigma_y^2 \right)$ based on the y-axis acceleration value. The calculated y-axis acceleration variance value approximates to zero ('0') when the walking direction of the pedestrian is coincident with the heading direction of the terminal.

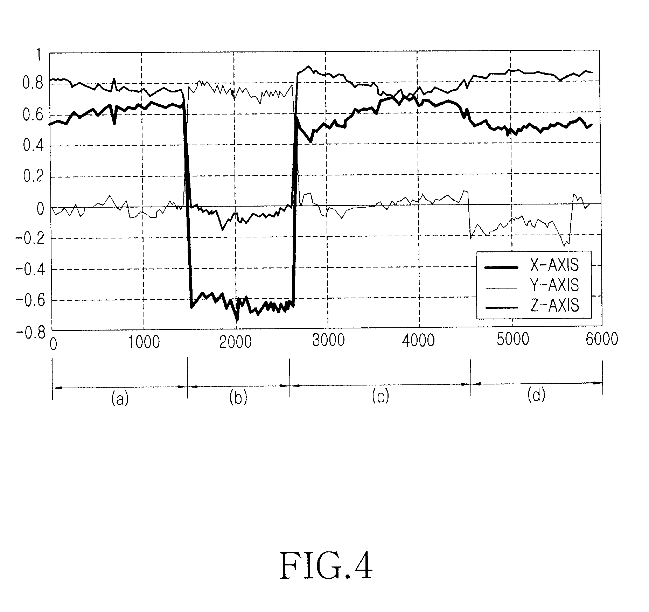

To be more specific, a graph in FIGURE 4 illustrates x, y, and z-axis acceleration variance values with respect to frequency according to an embodiment of the present invention.

Sections (a) and (c) in FIGURE 4 represent situations in which the heading direction of the terminal is coincident with the moving direction of the pedestrian. In these sections, while the x and z-axis acceleration values of the terminal have arbitrary values, the y-axis acceleration value has a value close to zero ('0'). That is, if the pedestrian moves such that the heading direction of the terminal may correspond to the x-axis direction as illustrated in FIGURE 2, then the x and z-axis acceleration values have arbitrary values, but the y-axis acceleration value has a value approximating zero ('0').

Alternatively, section (b) in FIGURE 4 represents the situation in which the heading direction of the terminal is not coincident with the moving direction of the pedestrian. For example, if the moving direction of the pedestrian is the x-axis direction and the heading direction of the terminal is oriented in the y or z-axis directions, the y-axis acceleration value has a non-zero value and the x and z-axis acceleration values have a value less than or equal to zero ('0').

In this situation, the accuracy determiner 113 does not provide the control signal to the heading information calculator 114.

Section (d) in FIGURE 4 also represents the situation in which the heading direction of the terminal is not coincident with the moving direction of the pedestrian. In section (d), the moving direction of the pedestrian is the x-axis direction, and the heading direction of the terminal is tilted with respect not to the x-axis, but to the y-axis only. In this situation, the y-axis acceleration value has a non-zero value, and the x and z-axis acceleration values are similar to the x and z-axis acceleration values in sections (a) and (c). Even in section (d), the accuracy determiner 113 does not provide the control signal to the heading information calculator 114 if either the calculated y-axis location cosine value ($Cos^2\theta_y$) or the calculated y-axis acceleration variance value($\sigma^2 y$)does not meet the threshold requirements, as will be discussed with regard to block 304.

In block 304, the accuracy determiner 113 determines whether the calculated y-axis location cosine value ($Cos^2\theta_y$) is less than or equal to a predetermined cosine threshold ($\alpha$) and the calculated y-axis acceleration variance value $\left( \sigma_y^2 \right)$ is less than or equal to a predetermined variance threshold ($\beta$).

The accuracy determiner 113 proceeds to step 305 if the calculated y-axis location cosine value is less than or equal to the cosine threshold and the calculated y-axis acceleration variance value is less than or equal to the variance threshold. Otherwise, the accuracy determiner 113 ends the estimation of the pedestrian's location without providing the control signal to the heading information calculator 114.

In step 305, the accuracy determiner 113 provides the control signal to the heading information calculator 114. The heading information calculator 114 outputs the heading information of the terminal to the location estimation filter 130. The location estimation filter 130 estimates the location of the pedestrian using the input heading information of the terminal and the input x, y, and z-axis acceleration values.

As is apparent from the foregoing description, the present invention may more accurately estimate the location of the pedestrian by estimating the location of the pedestrian depending on the coincidence between the moving direction of the pedestrian and the heading direction of the terminal.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A pedestrian navigation device (100) using heading information of a termi nal, comprising:

   an earth magnetic field sensor (112) configured to detect a heading dire ction of the terminal;
   an acceleration sensor (111) configured to measure (301) x, y, and z-ax is acceleration values and a moving direction information of the terminal;
   a heading information calculator (114) configured to calculate (300) a c alculated heading information based on the detected heading direction of the terminal;
   an accuracy determiner (113) configured to determine (304) a validity of the calculated heading information based on the measured x, y, and z-axis accelera tion values; and
   a location estimation filter (130) configured to estimate (305) a locatio n of a pedestrian based on the validity of the calculated heading information.

2. The pedestrian navigation device (100) of claim 1, wherein the accuracy de terminer (113) is further configured to determine (304) whether the detected heading direction of the terminal is coincident with the moving direction of the terminal, base d on the measured x, y, and z-axis acceleration values.

3. The pedestrian navigation device (100) of claim 2, wherein the accuracy de terminer (113) is further configured to provide to the heading information calculator (114) a control signal for outputting the calculated heading information of the termin al to the location estimation filter when the detected heading direction of the terminal is coincident with the moving direction of the terminal.

4. The pedestrian navigation device (100) of claim 3, wherein the accuracy de terminer (113) is further configured to prevent output of the control signal when the detected heading direction of the terminal is not coincident with the moving direction of the terminal.

5. The pedestrian navigation device (100) of claim 4, wherein the heading inf ormation calculator (114) is further configured to provide the calculated heading info rmation of the terminal to the location estimation filter (130) upon receiving the cont rol signal for estimating the location of the pedestrian.

6. The pedestrian navigation device (100) of claim 5, wherein the location est imation filter (130) is further configured to estimate (305) the location of the pedestri an based on the measured x, y, and z-axis acceleration values and the calculated head ing information of the terminal.

7. A pedestrian navigation method using heading information of a terminal, c omprising:

   detecting a heading direction of the terminal;
   measuring (301) x, y, and z-axis acceleration values and a moving dire ction of the terminal;
   calculating (300) a calculated heading information based on the detecte d direction of the terminal;
   determining (304) a validity of the calculated heading information base d on the measured x, y, and z-axis acceleration values; and
   estimating (305) a location of a pedestrian based on the validity of the calculated heading information.

8. The pedestrian navigation method of claim 7, wherein determining the vali dity of the heading information comprises determining (304) whether the detected he ading direction of the terminal is coincident with the moving direction of the termina l, based on the measured x, y, and z-axis acceleration values.

9. The pedestrian navigation method of claim 8, wherein determining (304) th e validity of the heading information comprises:

   sending a control signal to output the calculated heading information of the terminal for estimating (305) the location of the pedestrian when the detected he ading direction of the terminal is coincident with the moving direction of the terminal.

10. The pedestrian navigation method of claim 9, wherein determining the val idity of the heading information further comprises:

   preventing output of the control signal when the detected heading direc tion of the terminal is not coincident with the moving direction of the terminal.

11. The pedestrian navigation method of claim 10, wherein estimating (305) the location of the pedestrian comprises estimating the location of the pedestrian based on the measured x, y, and z-axis acceleration values and the calculated heading information of the terminal when the calculated heading information is valid.

100

110

130

| ACCELERATION SENSOR |
| --- |

111

113

| ACCURACY DETERMINER |
| --- |

112

114

| EARTH MAGNETIC FIELD SENSOR |
| --- |

| HEADING INFORMATION CALCULATOR |
| --- |

| LOCATION ESTIMATION FILTER |
| --- |

120

| POSITIONING SYSTEM |
| --- |

FIG.1

FIG.2

START

CALCULATE HEADING INFORMATION
OF TERMINAL — 300

CALCULATE X, Y AND Z-AXIS
ACCELERATION VALUES — 301

CALCULATE $\cos^2 \theta_y$ — 302

CALCULATE $\sigma^2_y$ — 303

304
$\cos^2 \theta_y \leq \alpha$ & $\sigma^2_y \leq \beta$ ? — NO

YES

ESTIMATE LOCATION OF PEDESTRIAN USING
CALCULATED HEADING INFORMATION — 305

END

# FIG.3

FIG.4